# FASCICULE DE BREVET EUROPEEN

(11) **EP 0 462 870 B1**
(45) Date de publication et mention de la délivrance du brevet: **24.08.1994**
(21) Numéro de dépôt: 91401529.2
(22) Date de dépôt: 11.06.1991
(51) Int. Cl.: F16D 23/14

(54) **Butée d'embrayage comportant des moyens de solidarisation avec l'organe de manoeuvre**
Kupplungsausrücklager mit Haltevorrichtung für das Betätigungsorgan
Clutch release bearing comprising retaining means for the actuating member

(30) Priorité: 21.06.1990 FR 9007802
(43) Date de publication de la demande: 27.12.1991
(73) Titulaire: SKF FRANCE, F-92142 Clamart Cédex (FR)
(72) Inventeur: Caron, Fabrice, F-78210 Montigny-le-Bretonneux (FR)
(74) Mandataire: Casalonga, Axel

(56) Documents cités:
- EP-A- 0 111 204
- DE-A- 3 810 369
- FR-A- 2 078 122
- GB-A- 2 055 436
- GB-A- 2 073 353

## Description

La présente invention a pour objet une butée d'embrayage comportant un palier à roulement monté sur une douille de guidage munie d'une partie tubulaire et d'une collerette radiale sur laquelle vient prendre appui un organe de manoeuvre de la butée et des moyens d'encliquetage pour solidariser axialement l'organe de manoeuvre et la douille de guidage.

On connaît par la demande de brevet français 2 615 257 (SKF FRANCE) une butée d'embrayage comportant des moyens d'encliquetage constitués par des crochets moulés d'une seule pièce avec la douille de guidage en matière synthétique. On constate cependant pour certaines applications que ces crochets présentent une trop grande fragilité. Cette demande de brevet antérieure prévoit, en variante, l'utilisation de crochets rapportés faisant partie d'une pièce supplémentaire qui vient s'accrocher sur la collerette radiale de la douille de guidage. Une telle réalisation est cependant complexe et entraîne une augmentation des coûts de fabrication.

La demande de brevet français 2 461 157 (FERODO) décrit quant à elle une butée d'embrayage dans laquelle la solidarisation avec l'organe de manoeuvre est réalisée par pincement élastique de pions solidaires de l'organe de manoeuvre dans des clips métalliques individuels. Une telle réalisation, outre qu'elle présente une certaine complexité de montage, entraîne dans la pratique un risque d'échappement de l'organe de manoeuvre dans le cas d'efforts axiaux trop importants.

La présente invention a pour objet la réalisation d'une butée d'embrayage dans laquelle les moyens de solidarisation avec l'organe de manoeuvre soient de réalisation simple et permettent un montage aisé tout en assurant une solidarisation fiable et efficace dans toutes les conditions de fonctionnement.

La butée d'embrayage selon l'invention comporte un palier à roulement monté sur une douille de guidage munie d'une partie tubulaire et d'une collerette radiale sur laquelle vient prendre appui un organe de manoeuvre de la butée. Des moyens d'encliquetage sont prévus afin de solidariser axialement l'organe de manoeuvre et la douille de guidage. Selon l'invention, les moyens d'encliquetage comportent deux éléments de retenue métalliques indépendants capables d'être insérés et maintenus par encliquetage dans un logement prévu dans la douille de guidage. Chaque élément de retenue présente un crochet venant coopérer avec l'organe de manoeuvre.

La douille de guidage comporte avantageusement deux supports de montage présentant chacune un logement pour l'élément de retenue métallique considéré.

Chaque logement comprend un passage traversant la collerette radiale de la douille de guidage à travers lequel peut passer une extrémité de l'élément de retenue. De plus un moyen de butée est prévu dans chaque logement afin de limiter l'insertion de l'élément de retenue dans le logement.

Chaque logement comprend également de préférence deux glissières pour le guidage et le maintien de l'élément de retenue lors de son insertion dans le logement.

Enfin chaque logement peut comprendre avantageusement une portion de surface chanfreinée de façon à faciliter la flexion de l'extrémité de l'élément de retenue métallique lors de son insertion et lors du passage de son extrémité à travers la collerette radiale.

De cette manière, la solidarisation entre la douille de guidage et l'organe de manoeuvre se fait de manière efficace et simple par les deux éléments de retenue métalliques qui sont analogues à des clips et sont tous deux identiques. Chaque élément de retenue est solidarisé avec la douille de guidage par simple encliquetage, son positionnement et son guidage se faisant grâce à l'existence des glissières aménagées dans les logements précités et en venant en butée à l'intérieur de ceux-ci.

Les logements sont pratiqués dans les supports de montage qui se présentent sous la forme de protubérances par exemple diamètralement opposées implantées sur la face arrière de la collerette radiale de la douille de guidage c'est-à-dire la face opposée au palier à roulement et se trouvant du côté de l'organe de manoeuvre.

La solidarisation ainsi obtenue se fait par l'action des crochets des éléments de retenue sans qu'il y ait lieu de modifier la structure de l'organe de manoeuvre qui vient par ailleurs s'appuyer sur la collerette radiale de la douille de guidage.

Chaque élément de retenue métallique présente de préférence une forme générale plane cruciforme avec une branche axiale portant un crochet pour coopérer avec l'organe de manoeuvre et une branche transversale dont les faces principales sont capables de coopérer avec les glissières du logement de chaque support de montage. Le bord le plus axialement éloigné du crochet vient quant à lui en contact avec les moyens de butée lorsque l'élément de retenue est inséré dans le logement.

A l'extrémité opposée du crochet, la branche axiale présente avantageusement un repli ou une forme analogue permettant l'encliquetage sur la collerette radiale et capable de passer à travers ladite collerette raidale en fléchissant dans le passage traversant prévu dans chaque support de montage. Le repli d'encliquetage vient alors s'accrocher sur la face interne de la collerette radiale à l'opposé de l'organe de manoeuvre lorsque le bord de la branche transversale de l'élément de retenue est venu en contact avec la butée se trouvant dans le logement.

Les supports de montage de la douille de guidage sont avantageusement réalisées en matière synthétique moulée par injection en même temps que la partie tubulaire de la douille de guidage.

Chaque support de montage peut comporter en outre au moins une surface de guidage pour le guidage latéral de l'organe de manoeuvre.

Les supports de montage peuvent être disposées radialement à proximité de la partie tubulaire de la douille de guidage ou en d'autres endroits de la collerette radiale de la douille de guidage éloignés de ladite partie tubulaire. C'est ainsi que les supports de montage peuvent être disposées à proximité de la périphérie extérieure de la collerette radiale. Dans ce cas les crochets des éléments de retenue peuvent être dirigés vers l'intérieur.

L'invention sera bien comprise à l'étude de la description détaillée de quelques modes de réalisation pris à titre d'exemples nullement limitatifs et illustrés par les dessins annexés sur lesquels :
la figure 1 illustre une vue en coupe d'un premier mode de réalisation de l'invention;
la figure 2 est une vue extérieure selon la flèche F de la butée d'embrayage de la figure 1;
la figure 3 est une vue agrandie d'un détail de la figure 2 montrant en particulier l'un des supports de montage;
la figure 4 est une vue en plan d'un des éléments de retenue utilisé dans la butée d'embrayage illustrée sur la figure 1;
la figure 5 est une vue en coupe partielle analogue à la figure 1 d'une variante d'exécution; et
la figure 6 est une vue en coupe partielle analogue à la figure 1 d'une autre variante d'exécution.

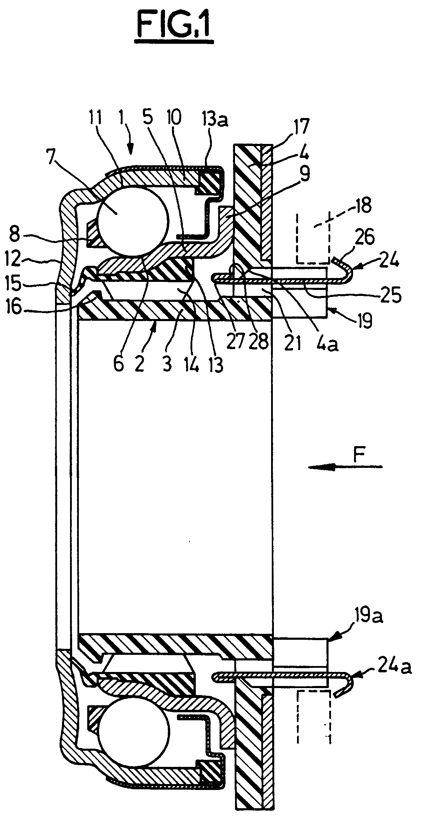

Telle qu'elle est illustrée sur les figures 1 à 3 la butée d'embrayage conforme à l'invention comporte un palier à roulement 1 monté sur une douille de guidage 2 laquelle comporte une portion tubulaire 3 qui peut coulisser par rapport à un tube-guide (non représenté sur la figure) et une collerette radiale 4. Le palier à roulement 1 comporte une bague intérieure de roulement 5 à paroi mince réalisée par emboutissage d'une tôle ou d'un tube présentant un chemin de roulement torique 6 pour une rangée de billes 7 maintenues dans une cage 8. La bague intérieure 5 comporte également une prolongation dirigée vers l'extérieur sous la forme d'une collerette radiale 9 qui vient en contact de frottement sur la surface frontale intérieure de la collerette radiale 4. Le palier à roulement 1 se complète par une bague extérieure 10 également à paroi mince réalisée par emboutissage d'une tôle ou d'un tube qui présente un chemin de roulement torique 11 pour les billes 7 ainsi qu'une portion torique 12 qui vient en contact avec la surface du diaphragme d'un dispositif d'embrayage non représenté sur la figure lors du déplacement longitudinal de l'ensemble de la butée par rapport au tube-guide sur lequel coulisse la douille de guidage 2. Le palier à roulement 1 est protégé par un flasque de protection 13a fixé sur la bague extérieure 10.

Un manchon en matière élastique 13, par exemple en élastomère ou en caoutchouc naturel, est disposé à l'intérieur de la bague interne 5 et présente une pluralité de nervures 14 parallèles à l'axe de la butée dirigées vers l'intérieur et dont le bord libre interne entre en contact avec la surface extérieure de la portion cylindrique 3 de la douille de guidage 2 laquelle est réalisée en matière synthhétique, rigide par exemple en matière synthétique additionnée de charges minérales ou analogues.

Le manchon élastique 13 présente une lèvre annulaire 15 qui assure l'étanchéité du palier à roulement 1 en entrant en contact avec la bague extérieure 10. Une nervure annulaire 16 disposée à l'extrémité de la portion cylindrique 3 assure le maintien du palier 1 sur la douille de guidage 2 avant le montage sur le tube guide.

Le collerette radiale 4 de la douille de guidage 2 présente un anneau métallique 17 sur lequel est surmoulée la dite collerette radiale 4. Cet anneau 17 qui a de préférence subi un traitement de durcissement superficiel, sert de surface de contact pour un organe de manoeuvre 18 représenté en pointillés sur la figure 1 et qui exerce un effort en direction axiale pour provoquer le déplacement de la butée dans son ensemble lors d'une opération de débrayage.

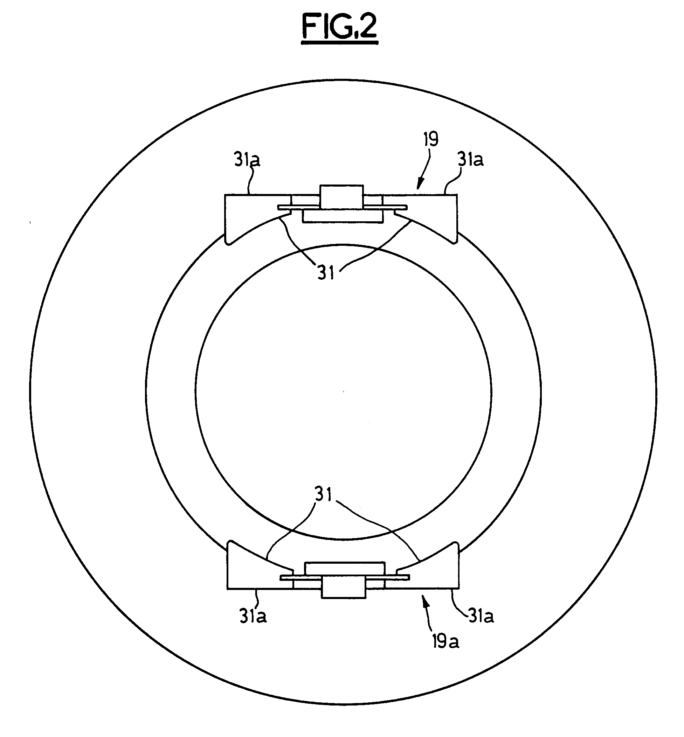

La douille de guidage 2 comporte deux supports de montage référencées 19, 19a dans leur ensemble et disposées de manière diamètralement opposée comme on peut le voir sur la figure 2 en faisant saillie en partie vers l'extérieur c'est-à-dire à l'opposé du palier à roulement 1 comme on peut le voir sur la figure 1.

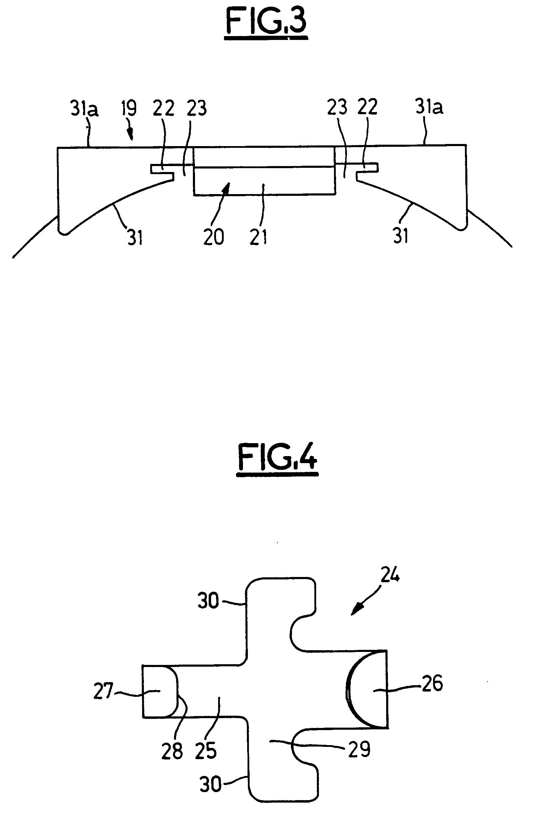

Comme on peut le voir en particulier sur la vue agrandie de la figure 3, le support de montage 19 qui est identique en tous points au support de montage 19a présente un logement 20 qui comprend un passage traversant 21 et deux glissières 22 placées de chaque côté du passage 21 en étant ouvertes sur leur extrémité frontale extérieure c'est-à-dire du côté de l'organe de manoeuvre 18 (figure 1). A leur autre extrémité, les glissières 22 sont obturées par une paroi pleine définissant une butée 23.

La solidarisation axiale de l'organe de manoeuvre 18 par rapport à la douille de guidage 2 se fait selon l'invention au moyen de deux éléments de retenue métalliques 24, 24a identiques qui viennent coopérer respectivement avec les support de montage 19, 19a.

En se reportant à la figure 4 on voit que l'élément de retenue 24 présente une forme générale cruciforme qui peut être obtenue par estampage d'une plaque métallique plane et formage ultérieur. Une branche axiale 25 porte à l'une de ses extrémités un crochet 26 replié à environ 30° par rapport au plan de la branche 25. A son extrémité opposée, la branche 25 présente un repli 27 dont le bord 28 définit une butée qui vient coopérer comme on peut le voir sur la figure 1 avec la face frontale interne de la collerette radiale 4.

L'élément de retenue 24 comporte en outre une branche transversale 29 dont les dimensions et l'épaisseur sont telles qu'elle puisse pénétrer dans les glissières 22 du logement 20. Le bord 30 de la branche transversale 29 est situé dans une position telle par rapport au bord 28 du repli 27 que ledit bord 28 se trouve juste à l'extérieur du passage 21 lorsque le bord 30 est venu en butée sur la surface 23.

La mise en place d'un élément de retenue métallique 24 est particulièrement aisée et se fait par simple poussée axiale dudit élément de retenue 24 après introduction de la branche transversale 29 dans les glissières 22 et de la branche axiale 25 dans le passage 21. Le passage 21 présente des dimensions suffisantes dans le sens radial pour permettre la flexion de la branche axiale 25 équipée du repli 27 suivie par l'encliquetage dudit repli 27 sur la face arrière de la collerette radiale 4. Le passage du repli d'encliquetage 27 est facilité par l'existence d'une zone chanfreinée 4a de la collerette radiale 4 contre laquelle vien buter l'extrémité du repli 27 lors de l'introduction de l'élément de retenue 24.

Le montage de l'organe de manoeuvre 18 se fait également par poussée axiale entraînant la flexion des crochets 26 des deux éléments de retenue 24, 24a.

Les faces internes 31 ou les faces externes 31a des pièces de montage 19, 19a (figures 2 et 3) jouent également le rôle de surfaces de guidage latérales pour l'organe de manoeuvre 18.

Sur la figure 1, les pièces de montage 19, 19a sont placées à proximité de la portion tubulaire 3 de la douille de guidage 2. Les passages 21 sont donc disposés sensiblement à la base de la collerette radiale 4. Les crochets 26 sont dirigés vers l'extérieur.

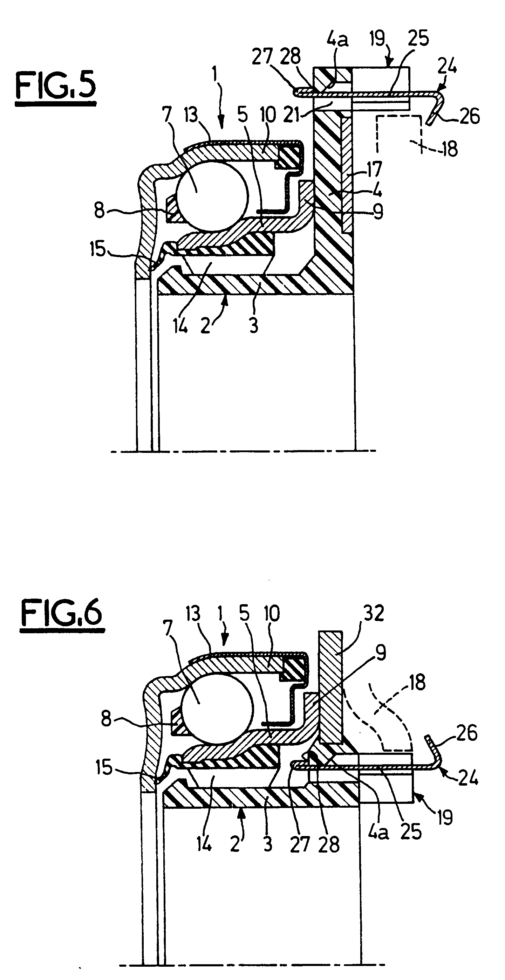

Dans le mode de réalisation de la figure 5 sur laquelle les pièces identiques portent les mêmes références, les pièces de montage 19, 19a sont au contraire disposées sur la collerette radiale 4 à proximité de la périphérie extérieure de cette dernière. Dans ce mode de réalisation, les crochets 26 des pièces de retenue 24 sont cette fois dirigés vers l'intérieur. A part cette différence, la structure des pièces utilisées est la même que dans la mode de réalisation précédent.

La structure particulière de la douille de guidage 2 illustrée sur les figures 1 et 5 n'est pas essentielle pour la présente invention. A titre d'exemple de modification, la figure 6 illustre une variante dans laquelle les pièces analogues portent les mêmes références mais où la douille de guidage 2 présente, à la place de la collerette radiale 4 en matière synthétique venue de moulage, une plaque métallique annulaire 32 sur laquelle la douille de guidage 2 en matière synthétique est surmoulée et consiste alors principalement en une portion tubulaire 3. Les deux surfaces frontales de la plaque 32 servent respectivement de surface de contact à la collerette radiale 9 de la bague intérieure 5 du palier 1 et à l'organe de manoeuvre 18.

A part cette différence, on retrouve dans cette variante les mêmes supports de montage 19, 19a disposées comme dans le mode de réalisation de la figure 1 au voisinage de la portion tubulaire 3 de la douille de guidage 2. Les éléments de retenue 24 utilisés dans cette variante sont identiques à ceux de la figure 1.

## Revendications

1. Butée d'embrayage comportant un palier à roulement (1) monté sur une douille de guidage (2) munie d'une partie tubulaire (3) et d'une collerette radiale (4) sur laquelle vient prendre appui un organe de manoeuvre (18) de la butée et des moyens d'encliquetage pour solidariser axialement l'organe de manoeuvre et la douille de guidage, caractérisée par le fait que les moyens d'encliquetage comportent deux éléments de retenue métalliques (24, 24a) indépendants capables d'être insérés et maintenus par encliquetage dans un logement (21) prévu dans la douille de guidage (2), chaque élément de retenue présentant un crochet (26) venant coopérer avec l'organe de manoeuvre (18).

2. Butée d'embrayage selon la revendication 1, caractérisée par le fait que la douille de guidage (2) comporte deux supports de montage (19, 19a) présentant chacune un logement (20) pour l'élément de retenue métallique (24).

3. Butée d'embrayage selon la revendication 2, caractérisée par le fait que chaque logement (20) comprend un passage (21) traversant la collerette radiale (4) de la douille de guidage (2) à travers lequel peut passer une extrémité de l'élément de retenue et un moyen de butée (23) pour limiter l'insertion de l'élément de retenue (24) dans le logement (20).

4. Butée d'embrayage selon les revendications 2 ou 3, caractérisée par le fait que chaque logement (20) comprend deux glissières (22) pour le guidage et le maintien de l'élément de retenue (24) lors de son insertion dans le logement (20).

5. Butée d'embrayage selon l'une quelconque des revendications 2 à 4, caractérisée par le fait que chaque logement (20) comprend une portion de surface chanfreinée (4a) de façon à faciliter la flexion de l'extrémité de l'élément de retenue (24) lors de son insertion et du passage de ladite extrémité à travers le passage (21) de la collerette radiale (4).

6. Butée d'embrayage selon les revendications 4 ou 5 caractérisée par le fait que chaque élément de retenue métallique (24, 24a) présente une forme générale plane cruciforme avec une branche axiale (25) portant le crochet précité (26) et une branche transversale (29) dont les faces principales sont capables de coopérer avec les glissières (22) du logement précité (20) et dont le bord (30) le plus axialement éloigné dudit crochet (26) vient en contact avec le moyen de butée (23) lorsque l'élément de retenue (24) est inséré dans le logement (20).

7. Butée d'embrayage selon la revendication 6, caractérisée par le fait que la branche axiale (25) présente, à l'extrémité opposée du crochet (26) un repli d'encliquetage (27) capable de passer à travers la collerette radiale (4) en fléchissant dans le passage traversant (21) et de venir s'accrocher sur la face interne de la collerette radiale (4) à l'opposé de l'organe de manoeuvre (18) lorsque le bord précité (30) de la branche transversale (29) de l'élément de retenue (24) est venu en contact avec le moyen de butée (23) du logement (20).

8. Butée d'embrayage selon l'une quelconque des revendications 2 à 7, caractérisée par le fait que chaque support de montage (19, 19a) de la douille de guidage (2) comporte en outre au moins une surface de guidage (31, 31a) capable de coopérer avec l'organe de manoeuvre (18).

9. Butée d'embrayage selon l'une quelconque des revendications précédentes, caractérisée par le fait que les supports de montage (19, 19a) sont disposées radialement à proximité de la partie tubulaire (3) de la douille de guidage (2).

10. Butée d'embrayage selon l'une quelconque des revendications 1 à 8, caractérisée par le fait que les supports de montage (19, 19a) sont disposées à proximité de la périphérie extérieure de la collerette radiale (4).

## Claims

1. Clutch thrust bearing comprising a rolling bearing (1) mounted on a guide bush (2) equipped with a tubular part (3) and with a radial flange (4) on which bears a member (18) for operating the thrust bearing, and snap-fastening means for connecting the operating member and the guide bush axially, characterised in that the snap-fastening means comprise two independent, metal retaining elements (24, 24a) which are capable of being inserted and held by snap-fastening in a housing (20) provided in the guide bush (2), each retaining element having a hook (26) interacting with the operating member (18).

2. Clutch thrust bearing according to Claim 1, characterised in that the guide bush (2) comprises two mounting supports (19, 19a), each having a housing (20) for the metal retaining element (24).

3. Clutch thrust bearing according to Claim 2, characterised in that each housing (20) comprises a passage (21) traversing the radial flange (4) of the guide bush (2) through which one end of the retaining element can pass, and an abutment means (23) for limiting the insertion of the retaining element (24) into the housing (20).

4. Clutch thrust bearing according to Claims 2 or 3, characterised in that each housing (20) comprises two slide channels (24) for guiding and holding in place the retaining element (24) when it is inserted into the housing (20).

5. Clutch thrust bearing according to any one of Claims 2 to 4, characterised in that each housing (20) comprises a surface portion (4a) which is chamfered in order to facilitate the bending of the end of the retaining element (24) during its insertion and the passage of the said end through the passage (21) of the radial flange (4).

6. Clutch thrust bearing according to Claims 4 or 5, characterised in that each metal retaining element (24, 24a) has a cross-shaped, plane general shape with one axial arm (25) carrying the abovementioned hook (26), and one transverse arm (29), the main faces of which are capable of interacting with the slide channels (22) of the abovementioned housing (20), and the edge (30) of which, which is furthermost, in the axial direction, from the said hook (26), comes into contact with the abutment means (23) when the retaining element (24) is inserted into the housing (20).

7. Clutch thrust bearing according to Claim 6, characterised in that the axial arm (25) has, at the opposite end of the hook (26), a snap-fastening fold (27) capable of passing through the radial flange (4) by bending in the through-passage (21), and of hooking onto the inner face of the radial flange (4) opposite the operating member (18) when the abovementioned edge (30) of the transverse arm (29) of the retaining element (24) has come into contact with the abutment means (23) of the housing (20).

8. Clutch thrust bearing according to any one of Claims 2 to 7, characterised in that each mounting support (19, 19a) of the guide bush (2) furthermore comprises at least one guide surface (31, 31a) capable of interacting with the operating member (18).

9. Clutch thrust bearing according to any one of the preceding claims, characterised in that the mounting supports (19, 19a) are arranged radially in proximity to the tubular part (3) of the guide bush (2).

10. Clutch thrust bearing according to any one of Claims 1 to 8, characterised in that the mounting supports (19, 19a) are arranged in proximity to the outer periphery of the radial flange (4).

## Patentansprüche

1. Kupplungsausrücker, der ein Wälzlager (1), das auf einer Führungsbüchse (2) angeordnet ist, die ein rohrförmiges Teil (3) und einen radialen Flansch (4) aufweist, auf welchen ein Betätigungsglied (18) des Ausrückers Druck ausübt, und Rastmittel aufweist, um das Betätigungsglied und die Führungsbüchse in axialer Richtung zu verbinden,
dadurch gekennzeichnet, daß die Rastmittel zwei metallische Rückhalteelemente (24, 24a) umfassen, die unabhängig voneinander in eine in der Führungsbüchse (2) vorgesehene Aufnahme (20) eingeschoben und durch Verrasten gehalten werden können, und daß jedes Rückhalteelement einen Haken (26) aufweist, der mit dem Betätigungsglied (18) zusammenwirkt.

2. Kupplungsausrücker nach Anspruch 1, dadurch gekennzeichnet, daß die Führungsbüchse (2) zwei Montagehalterungen (19, 19a) umfaßt, von denen jede eine Aufnahme (20) für das metallische Rückhalteelement (24) aufweist.

3. Kupplungsausrücker nach Anspruch 2, dadurch gekennzeichnet, daß jede Aufnahme (20) einen den radialen Flansch (4) der Führungsbüchse (2) durchquerenden Durchlaß (21), durch den ein Endbereich des Rückhalteelementes durchtritt, und ein Anschlagmittel (23) aufweist, um das Einschieben des Rückhalteelementes (24) in die Aufnahme (20) zu begrenzen.

4. Kupplungsausrücker nach Anspruch 2 oder 3, dadurch gekennzeichnet, daß jede Aufnahme (20) zwei Gleitführungen (22) zur Führung und Halterung des Rückhalteelementes (24) bei seinem Einschieben in die Aufnahme (20) aufweist.

5. Kupplungsausrücker nach einem der Ansprüche 2 bis 4, dadurch gekennzeichnet, daß jede Aufnahme (20) einen Schrägflächenabschnitt (4a) aufweist, um die Auslenkung des Endbereiches des Rückhalteelementes (24) bei seinem Einschieben und dem Durchtritt des Endbereiches durch den Durchlaß (21) des radialen Flansches (4) zu erleichtern.

6. Kupplungsausrücker nach Anspruch 4 oder 5, dadurch gekennzeichnet, daß jedes metallische Rückhalteelement (24, 24a) eine im wesentlichen plane kreuzförmige Gestalt mit einem axialen, den oben erwähnten Haken (26) tragenden Balken (25) und mit einem Querbalken (29) aufweist, dessen Hauptflächen geeignet sind, mit den Gleitführungen (22) der oben genannten Aufnahme (20) zusammenzuwirken, und dessen von dem Haken (26) am weitesten entfernt liegender Rand (30) mit dem Anschlagmittel (23) in Berührung kommt, wenn das Rückhalteelement (24) in die Aufnahme (20) eingeschoben ist.

7. Kupplungsausrücker nach Anspruch 6, dadurch gekennzeichnet, daß der axiale Balken (25) an dem dem Haken (26) gegenüberliegenden Endbereich einen Umbug (27) zum Verrasten aufweist, der geeignet ist, durch den radialen Flansch (4) hindurchzutreten, indem er sich in dem zu durchquerenden Durchlaß (21) biegt, und der sich auf der dem Betätigungsglied (18) gegenüberliegenden Innenfläche des radialen Flansches (4) verhakt, wenn der oben erwähnte Rand (30) des Querbalkens (29) des Rückhalteelementes (24) mit dem Anschlagmittel (23) der Aufnahme (20) in Berührung gekommen ist.

8. Kupplungsausrücker nach einem der Ansprüche 2 bis 7, dadurch gekennzeichnet, daß jede Montagehalterung (19, 19a) der Führungsbüchse (2) außerdem wenigstens eine Führungsfläche (31, 31a) umfaßt, die geeignet ist, mit dem Betätigungsglied (18) zusammenzuwirken.

9. Kupplungsausrücker nach einem der vorhergehenden Ansprüche, dadurch gekennzeichnet, daß die Montagehalterungen (19, 19a) in radialer Richtung in der Nähe des rohrförmigen Teiles (3) der Führungshülse (2) angeordnet sind.

10. Kupplungsausrücker nach einem der Ansprüche 1 bis 8, dadurch gekennzeichnet daß die Montagehalterungen (19, 19a) in der Nähe des äußeren Randes des radialen Flansches (4) angeordnet sind.
